# EUROPEAN PATENT SPECIFICATION

(11) **EP 4 422 967 B1**
(45) Date of publication and mention of the grant of the patent: **08.04.2026**
(21) Application number: 22798166.9
(22) Date of filing: 14.10.2022
(51) Int. Cl.: B63B 27/10, F03D 13/25, B66C 13/06, B66C 23/52, E02D 5/28, E02D 7/02, E02D 27/52, E02D 13/04

(54) **METHOD FOR INSTALLATION OF A MONOPILE AND INSTALLATION VESSEL**
VERFAHREN ZUR INSTALLATION EINES EINPFAHLS UND INSTALLATIONSSCHIFF
PROCÉDÉ D'INSTALLATION D'UN MONOPIEU ET NAVIRE D'INSTALLATION

(30) Priority: 28.10.2021 NL 2029539; 21.12.2021 NL 2030204
(43) Date of publication of application: 04.09.2024
(60) Divisional application: 25184030.2
(73) Proprietor: Itrec B.V., 3115 HH Schiedam (NL)
(72) Inventor: VEHMEIJER, Terence Willem August, 3115 HH SCHIEDAM (NL); BRAAKSMA, Jelmer, 3115 HH SCHIEDAM (NL)
(74) Representative: EP&C
(86) International application number: PCT/EP2022/078698
(87) International publication number: WO 2023/072635

(56) References cited:
- WO-A1-2021/058544
- WO-A1-2023/085930
- US-A1- 2020 308 796
- US-A1- 2021 047 009
- US-A1- 2021 123 203

## Description

The present invention relates to the field of installation of a monopile that is adapted to support an offshore wind turbine. The invention relates to a method for installation of a monopile and to an installation vessel for installation of the monopile.

In the field of offshore wind turbines, monopiles of a length of 100 meters or more, diameter of 10 meters or more, and with a mass of more than 1000 tonnes, even above 2000 tonnes, are not uncommon. These monopiles have to be transported to an offshore installation location, where they are to be installed.

In the prior art, for example in WO2018/117846, it is known to transport a monopile on a vessel to an offshore installation site in a horizontal orientation. At the installation site, the monopile is gripped by a pile holder which is provided on the vessel while the monopile is still in the horizontal orientation. The monopile is subsequently upended into a vertical orientation before being lowered into the water. The monopile is upended by means of a crane provided on the vessel while the lower end of the pile is supported by the pile holder.

In US2021/123203, the vessel is provided with a dedicated upending device and a separate dedicated pile holder device. The upending of the monopile is done with the lower end portion of the monopile resting on the upending device and the upper end of the monopile being lifted by the crane. Whilst the monopile is held by the upending device, its lowermost end moves into the opened pile holder. Then the pile holder is closed about the monopile, and then the upending device is released from the monopile.

In alternative methods, such as in for example WO2018/052291 or WO2019/172752, the monopile is upended into a vertical orientation by the crane first, before being gripped by the pile holder. For example, upending of the monopile is done using just the crane, or using two cranes that cooperate in the upending process. For example, use is made of a dedicated upending tool that is distinct from any pile holding device of the vessel. For example, e.g. as discussed in WO2020/128016, a single crane is used in combination with a dedicated upending tool engaging on the lower end portion of the monopile for the upending process. In these methods, the monopile is gripped by the pile holder while the monopile is already in the vertical orientation and suspended from the crane. A downside of these methods is that the pile holder may be damaged by the monopile before the monopile is gripped by the pile holder or when the pile holder is in the process of gripping the monopile. The pile holder may be more easily damaged as monopiles increase in size and weight.

A known approach to alleviate this downside is to provide the pile holder with fenders or the like for the monopile, e.g. to shield the rather fragile pile engaging devices of the pile holder (which usually have one or more hydraulic actuators for their accurate operation/positioning) from any undue collision. A further known approach is to first set the array of pile engaging devices of the pile holder into a retracted position, so as to initially create an oversized opening for the monopile during the gripping phase. Another known approach is the use of tugger winches to stabilize the suspended monopile.

The invention aims to improve the existing method and vessel employed for installation of a monopile, e.g. in view of the engagement process of the pile holder and the monopile suspended from a crane of the vessel. For example, the invention aims to reduce the risk of damage to the pile holder by the monopile.

The invention relates to a method for installation of a monopile adapted to support an offshore wind turbine according to claim 1.

When the monopile is brought in the vertical orientation and is being suspended by the crane, the monopile and the crane form a massive pendulum, wherein the monopile forms the pendulum weight. Motion of the monopile relative to the vessel when in this configuration may be caused by a variety of factors, such as, for example, sea state induced vessel motion, for example roll and/or pitch, operation of the dynamic positioning system of the vessel (when present), change of load on the hull (e.g. due to movement of the center of mass of the monopile), operation of the ballast system of the vessel, wind forces acting on the large monopile and/or the crane, slew motion of crane during upending, luffing motion of the crane boom during upending, vibrations in the structure of the crane, e.g. in the boom of the crane, induced motion of the monopile as a result of motion of the crane, etc. Motion of the monopile relative to the vessel may further be, e.g. intentionally, caused by controlled movement of the crane, for example, when the monopile is moved, e.g. swerved, from a first location, e.g. a transport location, to a second location, e.g. the installation location.

The invention is based on the insight that motion, e.g. pendulum motion or slewing motion, of the monopile relative to the pile holder when suspended by the crane may cause damage to the pile holder when the pile holder is brought closer to the monopile, in particular in the process of gripping the monopile by the pile holder. Even a relatively small motion between the monopile and the pile holder may result in damage to one or more components of the pile holder due to the enormous weight of the monopile. Damage to the pile holder may, for example, be caused when the monopile is not yet in the pile holder and impacts the pile holder, e.g. one or more pile engaging devices thereof, when bringing the pile holder and the monopile together. Damage may also be caused due to impact between the pile holder and the monopile when the monopile is in the pile holder, e.g. but not yet securely gripped.

The invention reduces relative motion between the monopile and the pile holder by performing the invention. By reducing relative motion between the monopile and the pile holder damage caused by a possible impact between them may be reduced or avoided. Additionally, the risk of an impact between the monopile and the pile holder is reduced or avoided by the invention, for example because as the monopile starts moving towards the pile holder in an undesirable manner, the pile holder may start moving away from the monopile.

The vessel used in the method comprises a hull and a crane mounted on the hull. The vessel may be floating vessel or a jack-up vessel and the method may be performed when the vessel is in a floating condition or in a non-floating condition, e.g. the hull being supported by the jack-up legs.

The vessel further comprises a pile holding device comprising the pile holder for gripping the monopile and a support assembly which supports the pile holder. The support assembly is mounted to the hull of the vessel and supports the pile holder relative to the hull.

The pile holder is movable supported by the support assembly such that the pile holder may move in a horizontal plane relative to the hull. This allows the pile holder to move in the horizontal plane independent of the hull and the crane attached to the hull. For example, during driving the monopile into the seabed, the support assembly may be operated to ensure verticality of the monopile, e.g. compensating for vessel motion that would impair verticality.

The support assembly comprises motion actuators, e.g. hydraulic or mechanic motion actuators, which are configured for causing movement of the pile holder relative to the hull. Thus by controlling the motion actuators the pile holder may be moved in the horizontal plane relative to the hull. As explained herein, this also allows for synchronizing motion of the pile holder in the phase of gripping of the monopile suspended from the crane. The motion actuators are controlled by a motion control unit, e.g. including a processor, that provides control signals for the motion actuators.

The installation vessel further comprises a monitoring system that is configured to - in a gripping phase wherein the monopile is suspended from the crane and is to be gripped by the pile holder - monitor a position and a movement of the suspended monopile in the horizontal plane relative to the pile holder. The monitoring system, for example, comprises a number of sensors for determining the position and movement. These one or more sensors may just detect position/distance, with the movement being determined on the basis of multiple determinations of position/distance over time by these one or more sensors. These one or more sensors are, preferably, provided on the pile holder. In another embodiment, the monitoring system may comprise one or more sensors that are provided on the support assembly or on the hull and the position and movement relative to the pile holder are determined taking known movement relative to the hull of the vessel into account. In yet another embodiment, the one or more sensors are provided on the monopile, e.g. inertia-based sensors, and/or one or more sensors on a lifting tool that is suspended from the crane and securely holds the top end of the monopile. For example, in order to determine movement of the monopile the monitoring system determines a position of the monopile at multiple times, e.g. at fixed time intervals, and relates a change in position of the monopile to a movement of the monopile. For example, the monitoring system is configured to determine a position and a movement of the monopile with a frequency above 20Hz, preferably above 40Hz, for example with 50Hz.

The monitoring system is configured to provide signals representative of the monitored position and movement of the monopile relative to the pile holder to the motion control unit. This allows the motion control unit to control the motion actuators, and thus movement of the pile holder, based on the monitored position and movement of the monopile.

The method according to the invention, making use of the installation vessel, comprises operating the motion actuators, by the motion control unit, to synchronize a movement of the pile holder relative to the hull with a movement of the monopile based on the provided signals. By synchronizing movement of the pile holder with movement of the monopile, relative movement between the pile holder and the monopile may be controlled, possibly minimized or even eliminated ahead of the actual gripping of the monopile by the pile holder. For example, if the movement of the pile holder is synchronized perfectly with a movement of the monopile there may be no relative movement between the pile holder and the monopile at the actual gripping stage. For example, the synchronization may not be perfect and a small relative movement between the monopile and the pile holder may persist. The relative movement between the pile holder and the monopile is, when the movements are synchronized, smaller than the relative movement between the pile holder and the hull of the vessel. For example, a movement of the pile holder may only be synchronized in a single direction, e.g. an x-direction, with a movement of the monopile and not be synchronized in another direction, e.g. a y-direction.

The motion actuators are operated to align a center of the pile holder with a central axis of the monopile by the motion control unit. For example, a movement of the pile holder in a direction towards the monopile may not be synchronized with a movement of the monopile, but rather a small relative movement of the pile holder towards the monopile may be caused to allow aligning, while simultaneously a movement of the pile holder in a perpendicular direction is synchronized with a movement of the monopile. This allows controlled aligning of the center of the pile holder with the central axis of the monopile, which allows gripping of the monopile with a reduced risk of impact.

In the approach of the invention, the pile holder active positions itself relative to the suspended monopile, which avoids or at least reduces the change of undue contact forces during the engagement. For example, application of the invention allows for a relatively smaller (e.g. in view of diameter) and/or lighter design of the pile holding device than in the prior art approach. For example, the potential to reduce size and/or weight of the pile holder may also translate into lower power requirements for its operation during landing and pile driving of the monopile.

In practice, the suspended monopile need not have a (significant) pendulum motion prior to the gripping phase, e.g. as the hull is not in floating condition, e.g. as the vessel is a jack-up vessel. Yet, even with a jack-up vessel some pendulum motion of the suspended monopile may occur. For example, wind forces and/or crane motion (e.g. slewing) may induce some pendulum motion of the suspended monopile. Even when no or little pendulum motion is exhibited by the suspended monopile, the invention will be advantageous. For example, (slight) inaccuracies of the relative path of the monopile and the pile holder leading up to and/or during the gripping phase can be dealt with using the invention.

In particular, when the vessel is in floating condition, e.g. embodied as a monohull vessel or a semi-submersible vessel sea state induced vessel motion may lead to pendulum motion of the suspended monopile prior to, and possibly during the gripping phase. In these circumstances the invention may be employed to deal with the pendulum motion of the massive monopile, by actively positioning the pile holder during the process of gripping the monopile.

Monitoring of the motion of the monopile suspended from the crane, during and preferably also ahead of the gripping phase, may be done with a motion sensing system, e.g. contactless, e.g. based on one or more camera's, and/or based on one or more inertia-based motion sensors. The one or more sensors of the motion sensing system may be mounted on the motion compensating pile holding device, e.g. on the pile holder thereof. The one or more sensors of the motion sensing system may, alternatively or also, be mounted elsewhere, e.g. on the hull of the vessel, on the crane, or (temporarily) on the monopile. The one or more sensors may also be provided on a lifting tool, in this case the position of the pile is determined by determining the position of the lifting tool with respect to the pile holder.

The sensors may be provided on the pile holder, e.g. on a ring of the pile holder, or below the pile holder, e.g. on a part of the support assembly, e.g. a part that is connected directly to the pile holder ring and moves in unison therewith. The sensors may, yet not preferred, also be provided on the hull, e.g. on the deck, of the vessel.

During the gripping phase, when the center of the pile holder is aligned with a central axis of the monopile, a lower end of the monopile may be situated below the pile holder and an upper end of the monopile may be situated above the pile holder.

The step of synchronizing the movement of the pile holder with the movement of the monopile comprises:
- first synchronizing a movement of the pile holder with a movement of the monopile in a first or x-direction; and
- then synchronizing a movement of the pile holder with a movement of the monopile in a second or y-direction, wherein the y-direction is perpendicular to the x-direction. The x-direction is along a longitudinal direction of the vessel and the y-direction is perpendicular to the longitudinal direction. For example, this embodiment allows to separate the synchronization of the movement of the pile holder with the monopile to be performed in two steps or phase, e.g. with some overlap of the steps or phases. It further allows to maintain the synchronization in the x-direction while slightly deviating from the synchronization in the y-direction when aligning the pile holder with the monopile.

When the pile holder is synchronized in motion with the suspended monopile, and the centres of the monopile and the pile holder are aligned, the pile engaging devices may be engaged with the monopile, e.g. preceded by a closing of the pile holder about the monopile. In embodiments, the monitoring system further comprises one or more sensors for providing actual data related to one or more of: vessel motion, vessel position, operation of a dynamic positioning system, vessel stability, operation of a ballast system of the vessel, and wherein the method further comprises:
- providing signals from the one or more additional sensors to the motion control unit. The data provided by the sensors may allow the motion control unit to control the movement of the pile holder relative the monopile based on additional parameters. For example, in case a sensor detects a vessel instability, e.g. as a result of the vessel nearly falling over, the motion control unit may control the pile holder to release the monopile and push the monopile away from the vessel. In another example, the pile holder may be additionally operated based on information on the movement of the vessel, e.g. movement due to waves or due to a motion drive of the vessel. In examples, the monitoring system and/or the motion control system may predict movement of the monopile, the pile holder, and/or the vessel based on data of the sensors, e.g. in case a sensor is a wave forecast sensor which predicts a window of shallow waves suitable for performing offshore operations.

In embodiments, the method further comprises:
- suspending the monopile by the crane,
and wherein the gripping phase comprises:
- operating the crane to swerve the monopile towards the pile holder. The monopile may be transported in a vertical direction and then be suspended from the crane or the monopile may be transported in a horizontal direction, be upended, e.g. by the crane or a separate device, and then be suspended by the crane. Once the monopile is suspended by the crane, and preferably once the movement of the pile holder is synchronized with the movement of the monopile or during this phase, the crane may be operated to move the monopile towards the pile holder, e.g. to align the center of the pile holder with the central axis of the monopile.

In embodiments, the monitoring system comprises one or more distance sensors, e.g. provided on the pile holder, for measuring the position, and preferably the movement, of the monopile relative to the pile holder. This allows for efficient measuring of the position of the monopile relative to the pile holder. Additionally, taking multiple measurements of the position of the monopile during a time period allows to determine a movement of the monopile relative to the pile holder based on the measurements of the distance sensors. The one or more distance sensors may be embodied as line sensors that measure a distance to the monopile over a line, e.g. the line being in the horizontal plane wherein the pile holder moves. For example, the one or more sensor are based on laser measurement, e.g. a laser making a projection on the monopile, and a camera detecting the projection on the monopile, a processor making suitable calculations based on the detected projection(s). The provision of line sensors and/or laser based measurements allows to accurately determine a distance of the pile holder to the monopile.

In a further embodiment, the monitoring system comprises two or more distance sensors, e.g. that are each provided on the pile holder, wherein the distance sensors are provided spatially separated from each other, e.g. on the pile holder, and wherein two or more of the distance sensors may have overlapping field of views, e.g. wherein the field of view of each of the distance comprises the center of the pile holder. For example, by providing two distance sensors that are separated in the horizontal plane, e.g. around a center of the pile holder, measurements of the monopile may be more precise. For example, by providing two distance sensors that are separated in a direction perpendicular to the horizontal plane, measurements of the monopile are less influenced by secondary steel effects, e.g. shadow effects. For example, four sensors are provided, two sensors may be provided at a first height on the pile holder and two sensors may be provided at a second height of the pile holder, different from the first height. The distance sensors at each height may further be provided at different angles to each other, so having non-parallel fields-of-view. Providing four sensors allows a reliable triangulation of the position of the monopile even when one of the sensors provides inaccurate data, e.g. due to shadow effects, a malfunction, or a blocked field of view. By allowing the center of the pile holder to be in the field of view, the sensors may determine the distance to the pile holder as the central axis of the pile holder is aligned with the center of the pile holder.

Preferably, the one or more distance sensors have a distance resolution below 1cm, more preferably below 5mm, e.g. below 3mm. Preferably, the distance sensors allow distance measurements at a distance of more than 50 meters, e.g. at a distance of more than 80 meters, of dark surfaces, e.g. with a remission of 10%. Preferably, the distance sensors allow distance measurements at a distance of more than 100 meters, e.g. at a distance of more than 200 meters, of light surfaces, e.g. with a remission of more than 80%.

In an embodiment, the support assembly comprises one or more horizontal hull mounted rails mounted on the hull of the vessel, e.g. on a deck thereof, e.g. X - rails extending horizontally and in a longitudinal direction of the hull of the vessel, wherein a subframe is movable over said one or more hull mounted rails, wherein one or more subframe mounted rails are mounted on said subframe and perpendicular to the hull mounted rails, e.g. one or more Y-rails extending horizontally and in transverse direction of the hull of the vessel, wherein a support frame is movable over said subframe mounted rails, and wherein the pile holder is mounted on the support frame, wherein controllable motion actuators of the support assembly are configured to move said subframe over the hull mounted rails and to move the support frame over the subframe mounted rails. For example, this is a practical embodiment of allowing the pile holder to move in the horizontal plane and, e.g. to allow synchronization of movement in the x-direction and in the y-direction.

The invention is further related to an installation vessel for installation of a monopile adapted to support an offshore wind turbine according to claim 8.

According to the invention, the motion control unit is configured to operate the motion actuators to first synchronize a movement of the pile holder with a movement of the monopile in a first or x-direction, and subsequently to operate the motion actuators to synchronize a movement of the pile holder with a movement of the monopile in a second or y-direction, wherein the y-direction is perpendicular to the x-direction. The x-direction is along the length of the vessel and the y-direction is transverse to the vessel.

In embodiments of the vessel, the monitoring system further comprises one or more sensors for providing actual data related to one or more of: vessel motion, vessel position, operation of a dynamic positioning system, vessel stability, operation of a ballast system of the vessel, and wherein the monitoring system is configured to provide the signals from the one or more additional sensors to the motion control unit.

In embodiments of the vessel, the crane is configured to move, e.g. swerve, the suspended monopile towards the pile holder for gripping the monopile by the pile holder.

In embodiments of the vessel, the monitoring system comprises one or more distance sensors, e.g. that are provided on the pile holder, for measuring the position, and preferably the movement, of the monopile relative to the pile holder.

In embodiments of the vessel, the monitoring system comprises two or more distance sensors, e.g. that are each provided on the pile holder, wherein the distance sensors are provided separated from each other, e.g. on the pile holder, and wherein two or more of the distance sensors have overlapping field of views, e.g. wherein the field of view of each of the distance comprises the center of the pile holder.

In embodiments of the vessel, the support assembly comprises one or more horizontal hull mounted rails mounted on the hull of the vessel, e.g. on a deck thereof, e.g. X - rails extending horizontally and in a longitudinal direction of the hull of the vessel, wherein a subframe is movable over said one or more hull mounted rails, wherein one or more subframe mounted rails are mounted on said subframe and perpendicular to the hull mounted rails, e.g. one or more Y-rails extending horizontally and in transverse direction of the hull of the vessel, wherein a support frame is movable over said subframe mounted rails, and wherein the pile holder is mounted on the support frame, wherein controllable motion actuators of the support assembly are configured to move said subframe over the hull mounted rails and to move the support frame over the subframe mounted rails.

As is known in the art, in embodiments, the pile holding device may lack a tilt functionality. Possibly, the pile holder is merely tiltable relative to the support assembly in view of obtaining a transport or docking mode.

In an embodiment, the vessel is equipped with one or more sensors configured to provide actual data related to one or more of: vessel motion, vessel position, operation of the dynamic positioning system, vessel stability, operation of the ballast system, wherein the positioning of the pile holder during the engagement phase is also controlled/fine tuned on the basis of signals from these one or more sensors.

The pile holding device may comprise, as is known in the art, a ring, or just has a single ring, that is provided with multiple pile engaging devices that are distributed about the circumference of the respective ring, e.g. each pile engaging device comprising one or more pile guiding rollers that are positionable radially relative to the ring, wherein the ring comprises a ring base and one or more movable jaws, e.g. two semi-circular jaws, each jaw being movable between a closed position and an opened position. In the closed position the respective ring may form a closed annulus. The pile holder, preferably, has a single ring.

The present disclosure also relates to a method for installation of a monopile adapted to support an offshore wind turbine, wherein use is made of an installation vessel comprising:
- a hull,
- a crane mounted on the hull,
- a motion compensating pile holding device, the device comprising:
   - a motion compensating support assembly mounted to the hull of the vessel,
   - a pile holder that is supported by the support assembly,

wherein the motion compensating support assembly comprises controllable motion actuators and an associated motion control unit configured for position control of the monopile during landing of the pile on the seabed and/or control of verticality of the monopile during driving of the monopile into the seabed so as to compensate for vessel motion,
wherein the method comprises, possibly with the hull of the vessel in floating condition:
   - operating the crane so as to bring the monopile in a suspended and upended orientation, e.g. solely using the crane or involving a monopile upending tool distinct from the motion compensating pile holding device,
   - bringing the suspended monopile, e.g. the lower end portion thereof, into engagement with the pile holder,
   - lowering the monopile by means of the crane whilst being guided by the pile holder so that the monopile is landed on the seabed,
   - driving the monopile deeper into the seabed, e.g. involving the use of pile driving equipment,
**characterized in that** during the phase of bringing the suspended monopile into engagement with the pile holder the motion, e.g. pendulum motion, of the monopile is monitored by a monitoring system providing signals representative of actual position and/or motion of the monopile, and these signals are supplied to the motion control unit of the motion compensating pile holding device, which governs - during the engagement phase - the controllable motion actuators to actively position the pile holder with the suspended monopile.

In embodiments, monitoring of the motion of the monopile suspended from the crane, during and preferably also ahead of the engagement phase, is done with a motion sensing system, e.g. contactless, e.g. based on one or more camera's, one or more inertia-based motion sensors.

In embodiments, the positioning of the pile holder during the engagement phase is controlled on the basis of signals from one or more sensors providing actual data related to one or more of: vessel motion, vessel position, operation of the dynamic positioning system, vessel stability, operation of the ballast system.

The present disclosure also relates to an installation vessel configured for installation of a monopile adapted to support an offshore wind turbine, wherein the installation vessel comprises:
- a hull,
- a crane mounted on the hull,
- a motion compensating pile holding device, the device comprising:
   - a motion compensating support assembly mounted to the hull of the vessel,
   - a pile holder that is supported by the support assembly,

wherein the motion compensating support assembly comprises controllable motion actuators and an associated motion control unit configured for position control of the monopile during landing of the pile on the seabed and/or control of verticality of the monopile during driving of the monopile into the seabed so as to compensate for vessel motion,
wherein the vessel is configured to perform, possibly with the hull of the vessel in floating condition, a method comprising:
   - operating the crane so as to bring a monopile in a suspended and upended orientation, e.g. solely using the crane or involving a monopile upending tool distinct from the motion compensating pile holding device,
   - bringing the suspended monopile into engagement with the pile holder,
   - lowering the monopile by means of the crane whilst being guided by the pile holder so that the monopile is landed on the seabed,
   - driving the monopile deeper into the seabed, e.g. involving the use of pile driving equipment,
**characterized in that** the vessel is provided with a monitoring system that is configured to monitor - during the phase of bringing the suspended monopile, e.g. the lower end portion thereof, into engagement with the pile holder - the motion, e.g. pendulum motion, of the monopile, which monitoring system provides signals representative of actual position and/or motion of the monopile, and in that the monitoring system is linked to the motion control unit so that said signals are supplied to the motion control unit, which motion control unit is configured to govern during said phase the controllable motion actuators in order to actively position the pile holder with respect to the suspended monopile holder.

The invention will now be explained with reference to the drawings. In the drawings:
- fig. 1 shows an installation vessel;
- fig. 2 shows in more detail the pile holding device shown in figure 1;
- fig. 3 shows a pile holding device in an open configuration; and
- fig. 4 shows a monohull installation vessel to illustrate the invention.

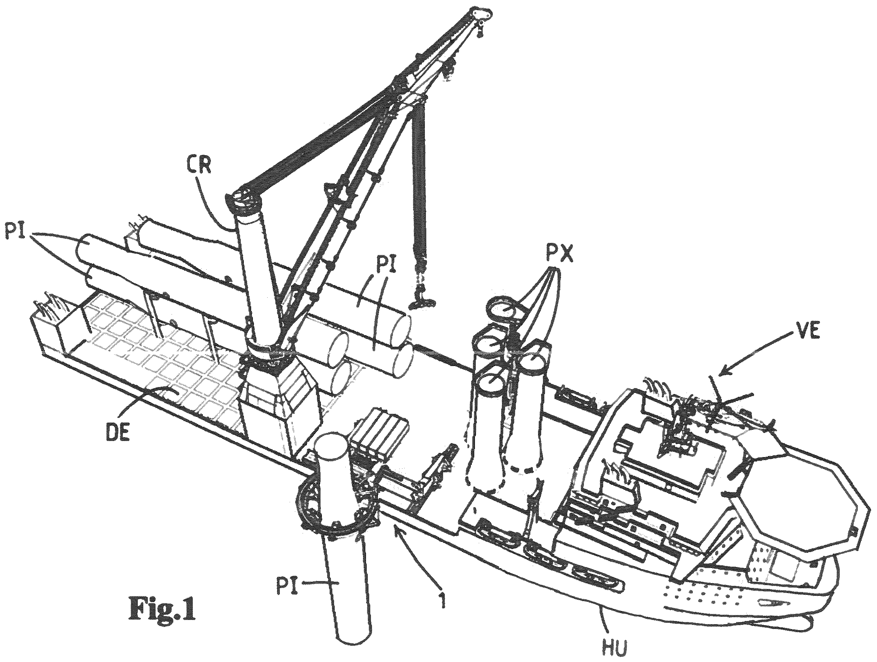

Fig. 1 shows the pile holding device 1 on a vessel VE while handling a monopile PI. In this embodiment, the vessel VE comprises a hull HU with at least one deck DE. The deck DE provides sufficient space to store, in this case, five monopiles PI in a horizontal orientation. The monopiles PI are, in this example, stored such that their longitudinal axes are parallel to a longitudinal axis of the vessel VE. The longitudinal axis of the vessel extending between a bow and an aft (i.e. stern) of the vessel. A transverse storage is also possible.

In this embodiment, the vessel VE is a monohull vessel, but alternatively, the vessel VE could be a semi-submersible.

In a non-shown embodiment, the vessel VE is a jack-up type vessel in which legs can be lowered into the water to lift the vessel at least partially out of the water so that waves have a limited or minimal effect on the vessel. The vessel can then e.g. be used in floating condition when the weather and wave conditions are good and can be used in jack-up condition when the weather and wave conditions are bad.

The pile holding device 1 is, in this embodiment, arranged at a longitudinal side of the vessel, in this embodiment the starboard side of the vessel VE, to hold the pile PI outside the contour of the vessel VE at a starboard side seen from above. Alternatively, the pile holding device 1 may be arranged at a stern of the vessel to hold a monopile PI outside the contour of the vessel at a stern side of the vessel seen from above.

In this embodiment, the crane CR is arranged next to the pile holding device 1. The crane CR is configured to handle a monopile PI, wherein handling may include any of lifting a monopile PI from its storage location, upending the monopile PI, positioning the pile PI relative to the pile holding device 1, and lowering the monopile PI to the sea floor. A monopile PI may be gripped by the pile holder device 1 when the monopile PI is suspended by the crane CR.

In case the pile holding device 1 and crane CR are arranged at the stern of the vessel, it is preferred that the crane is arranged in line with a centre of gravity of the vessel VE and the pile holding device 1 is arranged next to the crane. In such a case, it is preferred that the storage location for the pile driving mechanism is at a side of the crane CR opposite to the side where the pile holding device is arranged.

The vessel VE may also comprise deck space to store other equipment, e.g. pile extensions PX (also called transition pieces) that are configured to be connected to a free upper end of a pile PI and that are configured to support a mast of an offshore wind turbine.

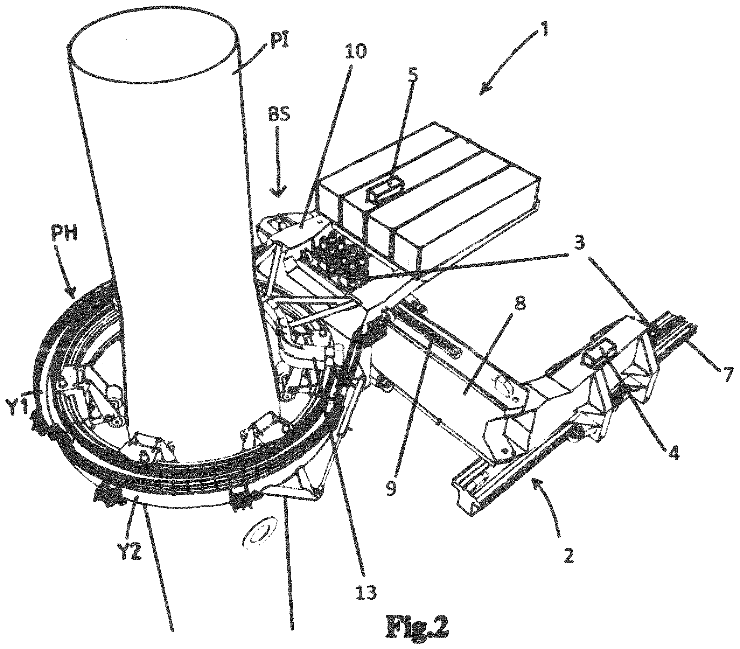

Figure 2 depicts the pile holding device 1 already gripping a monopile PI, e.g. after successfully completing the method steps of the invention, the central axis of the monopile PI is aligned with the center of the pile holder PI. The pile holding device 1 shown in figure 2 is mounted on a vessel VE which is not shown.

As can be seen in figure 2, the pile holding device 1 shown in the figures comprises a pile holder PH with a base structure BS, a first yaw Y1 and a second yaw Y2. The pile holding device further comprises a support assembly 2 which is mounted on the hull HU and which supports the pile holder PH at the base structure BS thereof.

In the embodiment shown, the support assembly 2 comprises two horizontal hull mounted rails 7 mounted on the hull HU of the vessel VE, e.g. on the deck DE thereof. The hull mounted rails 7 are X - rails extending horizontally along the hull HU of the vessel VE. A subframe 8 is movable over said the hull mounted rails 7 and one subframe mounted rail 9 is mounted on said subframe 8 and perpendicular to the hull mounted rails 7. Further, a support frame 10 is movable over said subframe mounted rails 9. The pile holder PH is mounted on the support frame 10. The motion actuators 3 of the support assembly 2 are configured to move said subframe 8 over the hull mounted rails 7 and to move the support frame 10 over the subframe mounted rails 9. This allows the pile holder PH to move in an x-direction along the hull mounted rails 7 and independently in a y-direction along the subframe mounted rails 9. This configuration allows his to separate the synchronization of the movement of the pile holder PH with the monopile PI to be performed in two steps. It further allows to keep the synchronization in the x-direction while slightly deviating from the synchronization in the y-direction when aligning the pile holder PH with the monopile PI.

The embodiment of the support assembly 2 shown allows the pile holder PH to move in a horizontal plane relative to and independent of the support assembly 2 mounted on the hull HU. Other embodiments of the support assembly 2 may allow the pile holder PH to move in the horizontal plane and are part of the invention.

The support assembly comprises motion actuators 3 which in the figure are provided near the hull mounted rails 7 and the subframe mounted rails 9 to drive the support assembly 2 over the rails.

The pile holder PH of figure 2 further comprises a bumper 13 for protecting the pile holder PH from impacts of the monopile PI.

The motion actuators 3 are configured for causing movement of the pile holder PH relative to the hull (HU). By controlling the motion actuators 3 the pile holder PH is movable in the horizontal plane relative to the hull HU. As will be explained herein, this mobility may allow for providing a synchronisation of a motion of the pile holder PH with the monopile that is suspended from the crane during a gripping phase.

The motion actuators 3 are controlled by a motion control unit 4, e.g. a processor, that provides control signals for the motion actuators 3. The motion control unit 4 in the figure is mounted on the support assembly 2. In embodiments, the motion control unit 4 may be provided on another location of the vessel VE, e.g. on a bridge of the vessel VE.

The pile holding device 1 further comprises a monitoring system 5 which in the figure is provided on the support assembly 2.

In embodiments, the monitoring system may be provided on the pile holder PH or on any other suitable location. For example, a first sensor of the monitoring system 5 may be provided on the first yaw Y1, a second sensor may be provided on the second yaw Y2 and a third sensor may be provided on the base structure BS.

In another example, one or more sensors of the monitoring system 5 may be provided on the support assembly 2 instead of on the pile holder PH, e.g. on the part thereof which is attached directly to the pile holder and moves in unison with the pile holder.

The monitoring system 5 is configured to - in a gripping phase wherein the monopile PI is suspended from the crane CR and is to be gripped by the pile holder PH - monitor a position and a movement of the suspended monopile PI in the horizontal plane relative to the pile holder PH.

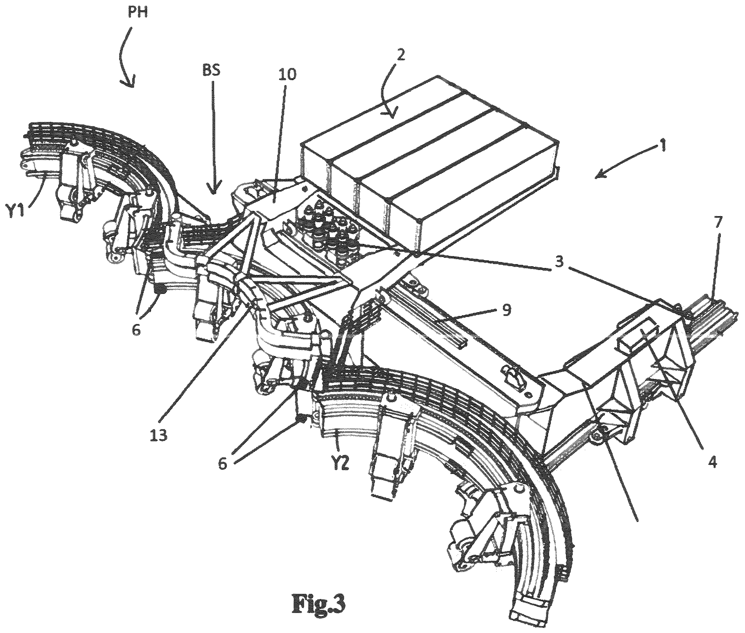

The monitoring system 5, for example, comprises a number of sensors 6 for determining the position and movement that are provided on the pile holder PH as shown in figure 3.

In the shown embodiment, the monitoring system 5 comprises sensors that are provided on the support assembly 2. For example, in order to determine movement of the monopile PI the monitoring system 5 determines a position of the monopile PI at multiple times, e.g. at fixed time intervals, and relates a change in position of the monopile PI to a movement of the monopile PI. For example, the monitoring system 5 is configured to determine a position and a movement of the monopile PI with a frequency above 20 Hz, preferably above 40Hz, for example with 50Hz.

The monitoring system 5 is configured to provide signals representative of the monitored position and movement of the monopile relative to the pile holder PI to the motion control unit 4. This allows the motion control unit 4 to control the motion actuators, and thus movement of the pile holder PH, based on the monitored position and movement of the monopile. As mentioned above the motion control unit 4 may be provided on any suitable location on the vessel VE.

In embodiments the motion control unit 4 adjacent to the monitoring system 5, e.g. adjacent a central processor of the monitoring system 5. In other embodiments, the motion control unit 4 is located adjacent to the motion actuators 3.

Figure 3 shows a pile holder PH in an open configuration, e.g. before gripping a monopile PI. The pile holder PH of figure 3 may be a different embodiment compared to the pile holder of figure 2. In the embodiment shown in figure 3 of the pile holding device 1 the first yaw Y1 is pivotably connected to the base structure BS to pivot about a first yaw pivot axis, and the second yaw Y2 is pivotably connected to the base structure BS to pivot about a second yaw pivot axis. Both the first yaw Y1 and the second yaw Y2 are pivotable between a respective closed position as shown in Figs. 1 and 2 and an open position as shown in Fig. 3.

In this embodiment, the base structure BS for surrounding the monopile, first yaw Y1 and second yaw Y2 are similar in size, i.e. they all extend along a 120 degree arc-shaped trajectory to from a circular segment. This can be best seen in Fig. 3 in which the first and second yaw Y1, Y2 are in the open position. Other embodiments of the pile holder are possible, e.g. wherein the first yaw Y1, the base structure BS and the second yaw Y2 are different in size.

In the open position, the monopile PI is allowed to move from and to the pile holder PI in a lateral direction, i.e. the lateral direction is in the horizontal plane wherein the pile holder moves.

Four distance sensors 6 of the monitoring system 5 are provided on the base structure BS of the pile holder PH for monitoring a position and a movement of a monopile PI relative to the pile holder PH. This allows for efficient measuring of the position of the monopile PI relative to the pile holder PH. For example, taking multiple measurements of the position of the monopile PI during a time period allows to determine a movement of the monopile PI relative to the pile holder PH based on the measurements of the distance sensors 6. The distance sensors 6 have overlapping fields of view.

The distance sensors 6, in this embodiment, are line sensors 6 that measure a distance to the monopile PI over a line, e.g. the line being in the horizontal plane wherein the pile holder PH moves. This allows to more accurately determine a distance of the pile holder PH to the monopile PI.

The distance sensors 6 are provided separated from each other on the pile holder PH. For example, distance sensors are mounted with non-parallel, e.g. perpendicular, field-of-views towards the center of the pile holder. For example, two sensors are provided at either end of the base structure BS at different heights thereof.

The four distance sensors 6 allow for a reliable triangulation of the position of the monopile PI even when one of the sensors 6 provides inaccurate data, e.g. due to shadow effects, a malfunction, or a blocked field of view. By allowing the center of the pile holder PH to be in the field of view, the distance sensors 6 may determine the distance to the pile holder PH as the central axis of the pile holder is aligned with the center of the pile holder. An advantage of providing the distance sensors 6 on the base structure BS over providing them on the yaws Y1, Y2 is that the field of view of the distance sensors 6 does not change when the pile holder PH is either in the open configuration or the closed configuration.

Preferably, the distance sensors 6 provide have a distance resolution below 1cm, more preferably below 5mm, e.g. below 3mm. Preferably, the distance sensors 6 allow distance measurements at a distance of more than 50 meters, e.g. at a distance of more than 80 meters, of dark surfaces, e.g. with a remission of 10%. Preferably, the distance sensors 6 allow distance measurements at a distance of more than 100 meters, e.g. at a distance of more than 200 meters, of light surfaces, e.g. with a remission of more than 80%.

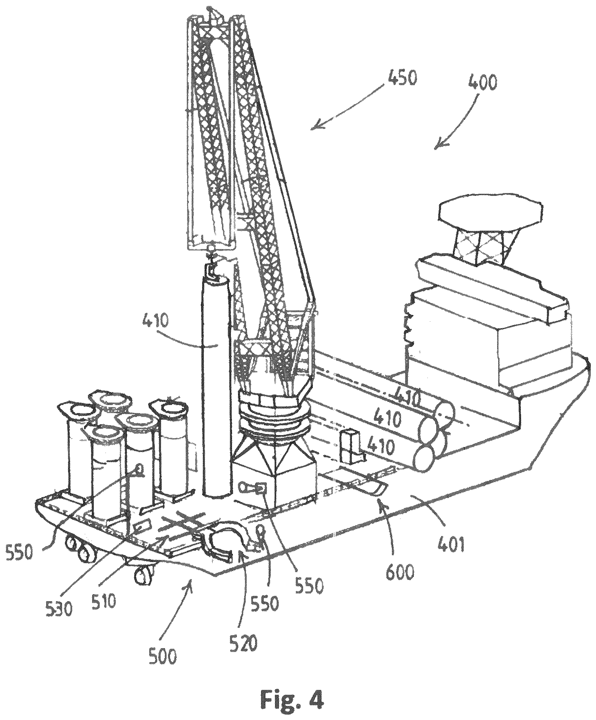

The figure 4 shows a monohull installation vessel 400 configured for installation of a monopile 410 adapted to support an offshore wind turbine.

The vessel 400 comprises a hull 401, a crane 450 mounted on the hull, and a motion compensating pile holding device 500.

The vessel 400 is configured to store one or more, preferably multiple, monopiles 410 in horizontal orientation, e.g. on deck, e.g. supported by dedicated support structures. As shown the monopiles 410 can be stored transverse to the longitudinal axis of the hull, yet storage parallel to said axis is preferred.

The device 500 comprises:
- a motion compensating support assembly 510 mounted to the hull of the vessel,
- a pile holder 520 that is supported by the support assembly 510.

The motion compensating support assembly 510 is shown only highly schematically as the skilled person is familiar with various embodiments thereof. Generally, the assembly 510 comprises controllable motion actuators and an associated motion control unit 530 configured for position control of the monopile 410 during landing of the pile on the seabed and/or control of verticality of the monopile 410 during driving of the monopile into the seabed so as to compensate for vessel motion.

The figure 4 schematically shows an embodiment, wherein the support assembly 510 of the pile holding device 500 comprises one or more horizontal hull mounted rails mounted on the hull of the vessel, e.g. on a deck thereof, e.g. X - rails extending horizontally and in a longitudinal direction of the hull of the vessel, wherein a subframe is movable over said one or more hull mounted rails, wherein one or more subframe mounted rails are mounted on said subframe and perpendicular to the hull mounted rails, e.g. one or more Y-rails extending horizontally and in transverse direction of the hull of the vessel, wherein a support frame is movable over said subframe mounted rails, and wherein the pile holder is mounted on the support frame, wherein controllable motion actuators of the support assembly are configured to move said subframe over the hull mounted rails and to move the support frame over the subframe mounted rails. For example, the motion actuators are embodied as a rack-and-pinion mechanism. For example, the pile holder 520 cannot tilt relative to the support frame.

The vessel 400 is equipped with an upending tool 600 that is distinct from the pile holding device 500, e.g. embodied to engage on the lower end portion of the monopile while still horizontal. The tool 600 supports the lower end during upending as the upper end of the monopile 410 is lifted by the crane 450.

The vessel 400 is configured to perform, here with the hull 401 of the vessel in floating condition, a method comprising:
- operating the crane 450 so as to bring the monopile 410 in a suspended and upended orientation, here involving the monopile upending tool 600 supporting the lower end portion of the monopile in the upending process,
- bringing the monopile 410 that is suspended from the crane 450 into engagement with the pile holder 520,
- lowering the monopile 410 by means of the crane 450 whilst being guided by the pile holder 520 so that the monopile is landed on the seabed,
- driving the monopile 410 deeper into the seabed, e.g. involving the use of pile driving equipment.

The vessel 400 is provided with a monitoring system that is configured to monitor - during the phase of bringing the suspended monopile 410, e.g. the lower end portion thereof, into engagement with the pile holder 510 - the motion, e.g. pendulum motion, of the monopile 410.

The monitoring system provides signals representative of actual position and/or motion of the monopile 410. The monitoring system is linked to the motion control unit 530 so that these signals are supplied to the motion control unit 530. The motion control unit 530 is configured to govern during the engagement phase the controllable motion actuators of the device 500 in order to actively position the pile holder 520 with respect to the suspended monopile 410.

As discussed, the monopile 410 may exhibit a pendulum motion ahead of and during the engagement phase. For example, sea state induced vessel motion and/or wind forces and/or crane motion (e.g. slewing) cause a pendulum motion of the monopile 410.

Due to the monitoring and associated active positioning of the pile holder 520 relative to the (moving) monopile, any contact during engagement will not lead to excessive loads and potential damage. The motion compensating support assembly is used to provide the desired active positioning of the holder 520.

The monopile 410 may be stabbed from above into the pile holder, e.g. embodied with a ring and pie guiding devices. In another approach, the pile holder is opened laterally, so that the monopile is laterally introduced into the pile holder, e.g. by slewing of the crane 450.

In an embodiment, the monitoring system comprises a motion sensing system, e.g. contactless, e.g. based on one or more camera's 550, one or mere inertia-based motion sensors.

In an embodiment, the vessel 400 is equipped with one or more sensors configured to provide actual data related to one or more of: vessel motion, vessel position, operation of the dynamic positioning system, vessel stability, operation of the ballast system. In embodiments, the positioning of the pile holder 520 during the engagement phase is also controlled on the basis of signals from these vessel related sensors.

In an embodiment, the vessel 400 is equipped with a wave prediction system, e.g. radar based. For example, a suitable time window for the engagement phase is determined or checked on the basis of the wave prediction.

## Claims

1. Method for installation of a monopile (PI) adapted to support an offshore wind turbine, wherein use is made of an installation vessel (VE) comprising:
- a hull (HU),
- a crane (CR) mounted on the hull (HU) and configured for suspending the monopile (PI),
- a pile holding device (1), the pile holding device (1) comprising:
- a pile holder (PH) configured to gripping the monopile (PI) when suspended from the crane (CR),
- a support assembly (2) which supports the pile holder (PH) and is mounted to the hull (HU) of the vessel (VE), wherein the support assembly (2) is configured to move the pile holder (PH) in a horizontal plane relative to the hull (HU),
which support assembly (2) comprises motion actuators (3) configured for causing movement of the pile holder (PH) relative to the hull (HU) in said plane, and
a motion control unit (4) for controlling the motion actuators (3) of the support assembly,
- a monitoring system (5) that is configured to - in a gripping phase wherein the monopile (PI) is suspended from the crane (CR) and is to be gripped by the pile holder (PH) - monitor a position and a movement of the suspended monopile (PI) in said horizontal plane relative to the pile holder (PH),
wherein the monitoring system (5) is configured to provide signals representative of the position and movement of the monopile (PI) relative to the pile holder (PH) to the motion control unit (4),
wherein the method comprises, possibly with the hull (HU) of the vessel (VE) in floating condition:
- monitoring with the monitoring system (5) the position and movement of the suspended monopile (PI) relative to the pile holder (PH);
- providing signals representative of the position and movement of the monopile (PI) relative to the pile holder (PH) to the motion control unit (4);
- operating under control of the motion control unit (4) the motion actuators (3) to synchronize a movement of the pile holder (PH) relative to the support assembly (2) with a movement of the monopile (PI) based on the provided signals; wherein the step of synchronizing the movement of the pile holder (PH) with the movement of the monopile (PI) comprises:
- first synchronizing a movement of the pile holder (PH) with a movement of the monopile (PI) in an x-direction along the longitudinal direction of the vessel; and
- then synchronizing a movement of the pile holder (PH) with a movement of the monopile (PI) in a y-direction, wherein the y-direction is perpendicular to the x-direction;
- operating under control of the motion control unit (4) the motion actuators (3) to align a center of the pile holder with a central axis of the monopile (PI); and
- gripping the monopile (PI) by the pile holder (PH).

2. Method according to claim 1, wherein the monitoring system (5) further comprises one or more sensors for providing actual data related to one or more of: vessel motion, vessel position, operation of a dynamic positioning system, vessel stability, operation of a ballast system of the vessel, and wherein the method further comprises:
- providing signals from the one or more additional sensors to the motion control unit (4).

3. Method according to one or more of the preceding claims, wherein the method further comprises:
- suspending the monopile (PI) by the crane (CR),
and wherein the gripping phase comprises:
- operating the crane (CR) to move, e.g. swerve, the monopile (PI) towards the pile holder (PH).

4. Method according to one or more of the preceding claims, wherein the monitoring system (5) comprises one or more distance sensors (6), e.g. that are provided on the pile holder (PH), for measuring the distance and/or position of the monopile (PI) relative to the pile holder (PH), e.g. allowing the determination of the movement based on multiple distance measurements over time.

5. Method claims according to claim 4, wherein the monitoring system (5) comprises two or more distance sensors (6) that are each provided on the pile holder (PH), wherein the distance sensors (6) are provided separated from each other on the pile holder (PH), and wherein two or more of the distance sensors (6) have overlapping field of views, e.g. wherein the field of view of each of the distance sensors (6) comprises the center of the pile holder (PH).

6. Method according to one or more of the preceding claims, wherein the support assembly (2) comprises one or more horizontal hull mounted rails (7) mounted on the hull (HU) of the vessel (VE), wherein a subframe (8) is movable over said one or more hull mounted rails (7), wherein one or more subframe mounted rails (9) are mounted on said subframe and perpendicular to the hull mounted rails (9), wherein a support frame (10) is movable over said subframe mounted rails (9), and wherein the pile holder (PH) is mounted on the support frame (10), wherein controllable motion actuators (3) of the support assembly (2) are configured to move said subframe (8) over the hull mounted rails (7) and to move the support frame (10) over the subframe mounted rails (9).

7. Installation vessel for installation of a monopile (PI) adapted to support an offshore wind turbine, wherein use is made of an installation vessel (VE) comprising:
- a hull (HU),
- a crane (CR) mounted on the hull (HU) and configured for suspending the monopile (PI),
- a pile holding device (1), the device (1) comprising:
- a pile holder (PH) configured to gripping the monopile (PI) when suspended from the crane (CR),
- a support assembly (2) which supports the pile holder (PH) and is mounted to the hull (HU) of the vessel (VE), wherein the support assembly (2) is configured to move the pile holder (PH) in a horizontal plane relative to the hull (HU),
which support assembly (2) comprises motion actuators (3) configured for causing movement of the pile holder (PH) relative to the hull in said plane, and a motion control unit (4) for controlling the motion actuators (3) of the support assembly,
- a monitoring system (5) that is configured to - in a gripping phase wherein the monopile (PI) is suspended from the crane (CR) and is to be gripped by the pile holder (PH) - monitor a position and a movement of the suspended monopile (PI);
wherein the monitoring system (5) is configured to provide signals representative of the position and movement of the monopile (PI);
wherein the monitoring system (5) is configured to - in a gripping phase wherein the monopile (PI) is suspended from the crane (CR) and is to be gripped by the pile holder (PH) - monitor a position and a movement of the suspended monopile (PI) in said horizontal plane relative to the pile holder (PH),
wherein the monitoring system (5) is configured to provide signals representative of the position and movement of the monopile (PI) relative to the pile holder (PH) to the motion control unit (4),
wherein the motion control unit (4) is configured to operate the motion actuators (3) to synchronize a movement of the pile holder (PH) with a movement of the monopile (PI) relative to the hull (HU) based on the signals representative of the position and movement of the monopile (PI), and wherein the motion control unit (4) is further configured to operate the motion actuators (3) to align a center of the pile holder (PH) with a central axis of the monopile (PI), wherein the motion control unit (4) is configured to operate the motion actuators (3) to first synchronize a movement of the pile holder (PH) with a movement of the monopile (PI) in an x-direction along the longitudinal direction of the vessel, and subsequently to operate the motion actuators (3) to synchronize a movement of the pile holder (PH) with a movement of the monopile (PI) in an y-direction, wherein the y-direction is perpendicular to the x-direction.

8. Vessel according to one or more of the claims 6-7, wherein the monitoring system (5) further comprises one or more sensors for providing actual data related to one or more of: vessel motion, vessel position, operation of a dynamic positioning system, vessel stability, operation of a ballast system of the vessel, and wherein the monitoring system is configured to provide the signals from the one or more additional sensors to the motion control unit (4).

9. vessel according to one or more of the claims 6-8, wherein the crane (CR) is configured to swerve the suspended monopile (PI) towards the pile holder (PH) for gripping the monopile (PI) by the pile holder (PH).

10. Vessel according to one or more of the claims 6-9, wherein the monitoring system (5) comprises one or more distance sensors (6), e.g. that are provided on the pile holder (PH), for measuring the distance and/or position of the monopile (PI) relative to the pile holder (PH), e.g. allowing the determination of the movement base on multiple distance measurements over time.

11. Vessel according to claim 10, wherein the monitoring system (5) comprises two or more distance sensors (6), e.g. that are each provided on the pile holder (PH), wherein the distance sensors (6) are provided separated from each other, e.g. on the pile holder (PH), and wherein two or more of the distance sensors (6) have overlapping field of views, e.g. wherein the field of view of each of the distance sensors (6) comprises the center of the pile holder (PH).

12. Vessel according to one or more of the claims 6-11, wherein the support assembly (2) comprises one or more horizontal hull mounted rails (7) mounted on the hull (HU) of the vessel (VE), wherein a subframe (8) is movable over said one or more hull mounted rails (7), wherein one or more subframe mounted rails (9) are mounted on said subframe and perpendicular to the hull mounted rails (9), wherein a support frame (10) is movable over said subframe mounted rails (9), and wherein the pile holder (PH) is mounted on the support frame (10), wherein controllable motion actuators (3) of the support assembly (2) are configured to move said subframe (8) over the hull mounted rails (7) and to move the support frame (10) over the subframe mounted rails (9).

## Patentansprüche

1. Verfahren zur Installation eines Einzelpfahls (Pl), der dazu geeignet ist, eine Offshore-Windenergieanlage zu stützen, wobei ein Installationsschiff (VE) verwendet wird, das Folgendes umfasst:
- einen Rumpf (HU),
- einen Kran (CR), der am Rumpf (HU) montiert und zum Aufhängen des Einzelpfahls (PI) ausgelegt ist,
- eine Pfahlhaltevorrichtung (1), wobei die Pfahlhaltevorrichtung (1) Folgendes umfasst:
- einen Pfahlhalter (PH), der zum Greifen des Einzelpfahls (PI) ausgelegt ist, wenn er am Kran (CR) aufgehängt ist,
- eine Stützanordnung (2), die den Pfahlhalter (PH) stützt und am Rumpf (HU) des Schiffes (VE) montiert ist, wobei die Stützanordnung (2) dazu ausgelegt ist, den Pfahlhalter (PH) in einer horizontalen Ebene relativ zum Rumpf (HU) zu bewegen,
wobei die Stützanordnung (2) Bewegungsaktuatoren (3) umfasst, die zum Bewirken einer Bewegung des Pfahlhalters (PH) relativ zum Rumpf (HU) in der Ebene ausgelegt sind, und
eine Bewegungssteuereinheit (4) zum Steuern der Bewegungsaktuatoren (3) der Stützanordnung,
- ein Überwachungssystem (5), das dazu ausgelegt ist, - in einer Greifphase, in der der Einzelpfahl (PI) am Kran (CR) aufgehängt ist und vom Pfahlhalter (PH) ergriffen werden soll - eine Position und eine Bewegung des aufgehängten Einzelpfahls (PI) in der horizontalen Ebene relativ zum Pfahlhalter (PH) zu überwachen,
wobei das Überwachungssystem (5) dazu ausgelegt ist, Signale, die die Position und Bewegung des Einzelpfahls (PI) relativ zum Pfahlhalter (PH) darstellen, an die Bewegungssteuereinheit (4) bereitzustellen,
wobei das Verfahren, gegebenenfalls mit dem Rumpf (HU) des Schiffes (VE) in einem schwimmenden Zustand, Folgendes umfasst:
- Überwachen der Position und Bewegung des aufgehängten Einzelpfahls (PI) relativ zum Pfahlhalter (PH) mit dem Überwachungssystem (5);
- Bereitstellen von Signalen, die die Position und Bewegung des Einzelpfahls (PI) relativ zum Pfahlhalter (PH) darstellen, an die Bewegungssteuereinheit (4);
- Betreiben der Bewegungsaktuatoren (3) unter Steuerung der Bewegungssteuereinheit (4), um eine Bewegung des Pfahlhalters (PH) relativ zur Stützanordnung (2) mit einer Bewegung des Einzelpfahls (PI) basierend auf den bereitgestellten Signalen zu synchronisieren; wobei der Schritt zum Synchronisieren der Bewegung des Pfahlhalters (PH) mit der Bewegung des Einzelpfahls (PI) Folgendes umfasst:
- zunächst Synchronisieren einer Bewegung des Pfahlhalters (PH) mit einer Bewegung des Einzelpfahls (PI) in einer x-Richtung entlang einer Längsrichtung des Schiffes; und
- dann Synchronisieren einer Bewegung des Pfahlhalters (PH) mit einer Bewegung des Einzelpfahls (PI) in einer y-Richtung, wobei die y-Richtung senkrecht zur x-Richtung steht;
- Betreiben der Bewegungsaktuatoren (3) unter Steuerung der Bewegungssteuereinheit (4), um eine Mitte des Pfahlhalters mit einer Mittelachse des Einzelpfahls (PI) auszurichten; und
- Greifen des Einzelpfahls (PI) durch den Pfahlhalter (PH).
senkrecht zur Längsrichtung steht.

2. Verfahren nach Anspruch 1, wobei das Überwachungssystem (5) ferner einen oder mehrere Sensoren zum Bereitstellen von Ist-Daten in Bezug auf eines oder mehrere von Folgendem umfasst: eine Schiffsbewegung, eine Schiffsposition, einen Betrieb eines dynamischen Positionierungssystems, eine Schiffsstabilität, einen Betrieb eines Ballastsystems des Schiffes, und wobei das Verfahren ferner Folgendes umfasst:
- Bereitstellen von Signalen von dem einen oder den mehreren zusätzlichen Sensoren an die Bewegungssteuereinheit (4).

3. Verfahren nach einem oder mehreren der vorhergehenden Ansprüche, wobei das Verfahren ferner Folgendes umfasst:
- Aufhängen des Einzelpfahls (PI) durch den Kran (CR),
und wobei die Greifphase Folgendes umfasst:
- Betreiben des Krans (CR), um den Einzelpfahl (PI) in Richtung des Pfahlhalters (PH) zu bewegen, z. B. zu schwenken.

4. Verfahren nach einem oder mehreren der vorhergehenden Ansprüche, wobei das Überwachungssystem (5) einen oder mehrere, z. B. am Pfahlhalter (PH) bereitgestellte, Abstandssensoren (6) zum Messen des Abstands und/oder der Position des Einzelpfahls (PI) relativ zum Pfahlhalter (PH), z. B. Ermöglichen der Bestimmung der Bewegung basierend auf mehreren Abstandsmessungen im Zeitverlauf, umfasst.

5. Verfahren nach Anspruch 4, wobei das Überwachungssystem (5) zwei oder mehr Abstandssensoren (6) umfasst, die jeweils am Pfahlhalter (PH) bereitgestellt sind, wobei die Abstandssensoren (6) getrennt voneinander am Pfahlhalter (PH) bereitgestellt sind, und wobei zwei oder mehr der Abstandssensoren (6) überlappende Sichtfelder aufweisen, z. B. wobei das Sichtfeld jedes der Abstandssensoren (6) die Mitte des Pfahlhalters (PH) umfasst.

6. Verfahren nach einem oder mehreren der vorhergehenden Ansprüche, wobei die Stützanordnung (2) eine oder mehrere am Rumpf (HU) des Schiffes (VE) montierte horizontale rumpfmontierte Schienen (7) umfasst, wobei ein Hilfsrahmen (8) über die eine oder die mehreren rumpfmontierten Schienen (7) beweglich ist, wobei eine oder mehrere hilfsrahmenmontierte Schienen (9) am Hilfsrahmen montiert und senkrecht zu den rumpfmontierten Schienen (9) sind, wobei ein Stützrahmen (10) über die hilfsrahmenmontierten Schienen (9) beweglich ist, und wobei der Pfahlhalter (PH) am Stützrahmen (10) montiert ist, wobei steuerbare Bewegungsaktuatoren (3) der Stützanordnung (2) dazu ausgelegt sind, den Hilfsrahmen (8) über die rumpfmontierten Schienen (7) zu bewegen und den Stützrahmen (10) über die hilfsrahmenmontierten Schienen (9) zu bewegen.

7. Installationsschiff zur Installation eines Einzelpfahls (Pl), der dazu geeignet ist, eine Offshore-Windenergieanlage zu stützen, wobei ein Installationsschiff (VE) verwendet wird, das Folgendes umfasst:
- einen Rumpf (HU),
- einen Kran (CR), der am Rumpf (HU) montiert und zum Aufhängen des Einzelpfahls (PI) ausgelegt ist,
- eine Pfahlhaltevorrichtung (1), wobei die Vorrichtung (1) Folgendes umfasst:
- einen Pfahlhalter (PH), der zum Greifen des Einzelpfahls (PI) ausgelegt ist, wenn er am Kran (CR) aufgehängt ist,
- eine Stützanordnung (2), die den Pfahlhalter (PH) stützt und am Rumpf (HU) des Schiffes (VE) montiert ist, wobei die Stützanordnung (2) dazu ausgelegt ist, den Pfahlhalter (PH) in einer horizontalen Ebene relativ zum Rumpf (HU) zu bewegen,
wobei die Stützanordnung (2) Bewegungsaktuatoren (3), die zum Bewirken einer Bewegung des Pfahlhalters (PH) relativ zum Rumpf in der Ebene ausgelegt sind, und eine Bewegungssteuereinheit (4) zum Steuern der Bewegungsaktuatoren (3) der Stützanordnung umfasst,
- ein Überwachungssystem (5), das dazu ausgelegt ist, - in einer Greifphase, in der der Einzelpfahl (PI) am Kran (CR) aufgehängt ist und vom Pfahlhalter (PH) ergriffen werden soll - eine Position und eine Bewegung des aufgehängten Einzelpfahls (PI) zu überwachen;
wobei das Überwachungssystem (5) dazu ausgelegt ist, Signale bereitzustellen, die die Position und Bewegung des Einzelpfahls (PI) darstellen;
wobei das Überwachungssystem (5) dazu ausgelegt ist, - in einer Greifphase, in der der Einzelpfahl (PI) am Kran (CR) aufgehängt ist und vom Pfahlhalter (PH) ergriffen werden soll - eine Position und eine Bewegung des aufgehängten Einzelpfahls (PI) in der horizontalen Ebene relativ zum Pfahlhalter (PH) zu überwachen,
wobei das Überwachungssystem (5) dazu ausgelegt ist, Signale, die die Position und Bewegung des Einzelpfahls (PI) relativ zum Pfahlhalter (PH) darstellen, an die Bewegungssteuereinheit (4) bereitzustellen,
wobei die Bewegungssteuereinheit (4) dazu ausgelegt ist, die Bewegungsaktuatoren (3) zu betreiben, um eine Bewegung des Pfahlhalters (PH) mit einer Bewegung des Einzelpfahls (PI) relativ zum Rumpf (HU) basierend auf den Signalen, die die Position und Bewegung des Einzelpfahls (PI) darstellen, zu synchronisieren, und wobei die Bewegungssteuereinheit (4) ferner dazu ausgelegt ist, die Bewegungsaktuatoren (3) zu betreiben, um eine Mitte des Pfahlhalters (PH) mit einer Mittelachse des Einzelpfahls (PI) auszurichten, wobei die Bewegungssteuereinheit (4) dazu ausgelegt ist, die Bewegungsaktuatoren (3) zu betreiben, um zunächst eine Bewegung des Pfahlhalters (PH) mit einer Bewegung des Einzelpfahls (PI) in einer x-Richtung entlang einer Längsrichtung des Schiffes zu synchronisieren, und anschließend die Bewegungsaktuatoren (3) zu betreiben, um eine Bewegung des Pfahlhalters (PH) mit einer Bewegung des Einzelpfahls (PI) in einer y-Richtung zu synchronisieren, wobei die y-Richtung senkrecht zur x-Richtung steht.

8. Schiff nach einem oder mehreren der Ansprüche 6-7, wobei das Überwachungssystem (5) ferner einen oder mehrere Sensoren zum Bereitstellen von Ist-Daten in Bezug auf eines oder mehrere von Folgendem umfasst: eine Schiffsbewegung, eine Schiffsposition, einen Betrieb eines dynamischen Positionierungssystems, eine Schiffsstabilität, einen Betrieb eines Ballastsystems des Schiffes, und wobei das Überwachungssystem dazu ausgelegt ist, die Signale von dem einen oder den mehreren zusätzlichen Sensoren an die Bewegungssteuereinheit (4) bereitzustellen.

9. Schiff nach einem oder mehreren der Ansprüche 6-8, wobei der Kran (CR) dazu ausgelegt ist, den aufgehängten Einzelpfahl (PI) in Richtung des Pfahlhalters (PH) zum Greifen des Einzelpfahls (PI) durch den Pfahlhalter (PH) zu schwenken.

10. Schiff nach einem oder mehreren der Ansprüche 6-9, wobei das Überwachungssystem (5) einen oder mehrere, z. B. am Pfahlhalter (PH) bereitgestellte, Abstandssensoren (6) zum Messen des Abstands und/oder der Position des Einzelpfahls (PI) relativ zum Pfahlhalter (PH), z. B. Ermöglichen der Bestimmung der Bewegung basierend auf mehreren Abstandsmessungen im Zeitverlauf, umfasst.

11. Schiff nach Anspruch 10, wobei das Überwachungssystem (5) zwei oder mehr Abstandssensoren (6) umfasst, die z. B. jeweils am Pfahlhalter (PH) bereitgestellt sind, wobei die Abstandssensoren (6) getrennt voneinander, z. B. am Pfahlhalter (PH), bereitgestellt sind, und wobei zwei oder mehr der Abstandssensoren (6) überlappende Sichtfelder aufweisen, z. B. wobei das Sichtfeld jedes der Abstandssensoren (6) die Mitte des Pfahlhalters (PH) umfasst.

12. Schiff nach einem oder mehreren der Ansprüche 6-11, wobei die Stützanordnung (2) eine oder mehrere am Rumpf (HU) des Schiffes (VE) montierte horizontale rumpfmontierte Schienen (7) umfasst, wobei ein Hilfsrahmen (8) über die eine oder die mehreren rumpfmontierten Schienen (7) beweglich ist, wobei eine oder mehrere hilfsrahmenmontierte Schienen (9) am Hilfsrahmen montiert und senkrecht zu den rumpfmontierten Schienen (9) sind, wobei ein Stützrahmen (10) über die hilfsrahmenmontierten Schienen (9) beweglich ist, und wobei der Pfahlhalter (PH) am Stützrahmen (10) montiert ist, wobei steuerbare Bewegungsaktuatoren (3) der Stützanordnung (2) dazu ausgelegt sind, den Hilfsrahmen (8) über die rumpfmontierten Schienen (7) zu bewegen und den Stützrahmen (10) über die hilfsrahmenmontierten Schienen (9) zu bewegen.

## Revendications

1. Procédé d'installation d'un monopieu (PI) conçu pour supporter une éolienne en mer, en utilisant un bâtiment d'installation (VE) comprenant :
- une coque (HU),
- une grue (CR) montée sur la coque (HU) et conçue pour suspendre le monopieu (PI),
- un dispositif de maintien de pieu (1), le dispositif de maintien de pieu (1) comportant :
- un organe de maintien de pieu (PH) conçu pour enserrer le monopieu (PI) suspendu à la grue (CR),
- un ensemble de support (2) qui supporte l'organe de maintien de pieu (PH) et est monté sur la coque (HU) du bâtiment (VE), l'ensemble de support (2) étant conçu pour déplacer l'organe de maintien de pieu (PH) dans un plan horizontal par rapport à la coque (HU),
ledit ensemble de support (2) comprenant des actionneurs de mouvement (3) conçus pour entraîner un mouvement de l'organe de maintien de pieu (PH) par rapport à la coque (HU) dans ledit plan, et
une unité de commande de mouvement (4) pour commander les actionneurs de mouvement (3) de l'ensemble de support,
- un système de contrôle (5) conçu pour contrôler, lors d'une phase d'enserrement dans laquelle le monopieu (PI) est suspendu à la grue (CR) et est destiné à être enserré par l'organe de maintien de pieu (PH), une position et un mouvement du monopieu (PI) suspendu dans ledit plan horizontal par rapport à l'organe de maintien de pieu (PH),
dans lequel le système de contrôle (5) est conçu pour fournir à l'unité de commande de mouvement (4) des signaux représentatifs de la position et du mouvement du monopieu (PI) par rapport à l'organe de maintien de pieu (PH),
le procédé comprenant, éventuellement tandis que la coque (HU) du bâtiment (VE) est dans un état flottant :
- contrôler avec le système de contrôle (5) la position et le mouvement du monopieu (PI) suspendu par rapport à l'organe de maintien de pieu (PH) ;
- fournir à l'unité de commande de mouvement (4) des signaux représentatifs de la position et du mouvement du monopieu (PI) par rapport à l'organe de maintien de pieu (PH) ;
- sous la commande de l'unité de commande de mouvement (4), actionner les actionneurs de mouvement (3) pour synchroniser un mouvement de l'organe de maintien de pieu (PH) par rapport à l'ensemble de support (2) avec un mouvement du monopieu (PI) en fonction des signaux fournis ; l'étape de synchronisation du mouvement de l'organe de maintien de pieu (PH) avec le mouvement du monopieu (PI) comprenant :
- synchroniser d'abord un mouvement de l'organe de maintien de pieu (PH) avec un mouvement du monopieu (PI) dans une direction x le long d'une direction longitudinale du bâtiment ; et
- synchroniser ensuite un mouvement de l'organe de maintien de pieu (PH) avec un mouvement du monopieu (PI) dans une direction y, la direction y étant perpendiculaire à la direction x ;
- sous la commande de l'unité de commande de mouvement (4), actionner les actionneurs de mouvement (3) pour aligner un centre de l'organe de maintien de pieu avec un axe central du monopieu (PI) ; et
- enserrer le monopieu (PI) au moyen de l'organe de maintien de pieu (PH).

2. Procédé selon la revendication 1, dans lequel le système de contrôle (5) comprend en outre un ou plusieurs capteurs pour fournir des données réelles relatives à un ou plusieurs des éléments suivants : mouvement du bâtiment, position du bâtiment, fonctionnement d'un système de positionnement dynamique, stabilité du bâtiment, fonctionnement d'un système de ballast du bâtiment, et le procédé comprenant en outre :
- fournir des signaux en provenance du ou des capteurs supplémentaires à l'unité de commande de mouvement (4).

3. Procédé selon une ou plusieurs des revendications précédentes, le procédé comprenant en outre :
- suspendre le monopieu (PI) au moyen de la grue (CR),
et dans lequel la phase d'enserrement comprend :
- actionner la grue (CR) pour déplacer, par exemple latéralement, le monopieu (PI) vers l'organe de maintien de pieu (PH).

4. Procédé selon une ou plusieurs des revendications précédentes, dans lequel le système de contrôle (5) comprend un ou plusieurs capteurs de distance (6), par exemple placés sur l'organe de maintien de pieu (PH), pour mesurer la distance et/ou la position du monopieu (PI) par rapport à l'organe de maintien de pieu (PH), permettant par exemple la détermination du mouvement sur la base de plusieurs mesures de distance dans le temps.

5. Procédé selon la revendication 4, dans lequel le système de contrôle (5) comprend au moins deux capteurs de distance (6) qui sont chacun placés sur l'organe de maintien de pieu (PH), dans lequel les capteurs de distance (6) sont séparés l'un de l'autre sur l'organe de maintien de pieu (PH), et dans lequel au moins deux des capteurs de distance (6) ont des champs de vision qui se chevauchent, par exemple dans lequel le champ de vision de chacun des capteurs de distance (6) comprend le centre de l'organe de maintien de pieu (PH).

6. Procédé selon une ou plusieurs des revendications précédentes, dans lequel l'ensemble de support (2) comprend un ou plusieurs rails horizontaux montés sur la coque (7), montés sur la coque (HU) du bâtiment (VE), dans lequel un cadre secondaire (8) est mobile sur lesdits un ou plusieurs rails montés sur la coque (7), dans lequel un ou plusieurs rails montés sur le cadre secondaire (9) sont montés sur ledit cadre secondaire et perpendiculaires aux rails montés sur la coque (9), dans lequel un cadre de support (10) est mobile sur lesdits rails montés sur le cadre secondaire (9), et dans lequel l'organe de maintien de pieu (PH) est monté sur le cadre de support (10), des actionneurs de mouvement commandables (3) de l'ensemble de support (2) étant conçus pour déplacer ledit cadre secondaire (8) sur les rails montés sur la coque (7) et pour déplacer le cadre de support (10) sur les rails montés sur le cadre secondaire (9).

7. Bâtiment d'installation pour l'installation d'un monopieu (PI) conçu pour supporter une éolienne en mer en utilisant un bâtiment d'installation (VE), comprenant :
- une coque (HU),
- une grue (CR) montée sur la coque (HU) et conçue pour suspendre le monopieu (PI),
- un dispositif de maintien de pieu (1), le dispositif (1) comportant :
- un organe de maintien de pieu (PH) conçu pour enserrer le monopieu (PI) suspendu à la grue (CR),
- un ensemble de support (2) qui supporte l'organe de maintien de pieu (PH) et est monté sur la coque (HU) du bâtiment (VE), l'ensemble de support (2) étant conçu pour déplacer l'organe de maintien de pieu (PH) dans un plan horizontal par rapport à la coque (HU),
ledit ensemble de support (2) comprenant des actionneurs de mouvement (3) conçus pour entraîner un mouvement de l'organe de maintien de pieu (PH) par rapport à la coque (HU) dans ledit plan, et une unité de commande de mouvement (4) pour commander les actionneurs de mouvement (3) de l'ensemble de support,
- un système de contrôle (5) conçu pour contrôler, lors d'une phase d'enserrement dans laquelle le monopieu (PI) est suspendu à la grue (CR) et est destiné à être enserré par l'organe de maintien de pieu (PH), une position et un mouvement du monopieu (PI) suspendu ;
dans lequel le système de contrôle (5) est conçu pour fournir des signaux représentatifs de la position et du mouvement du monopieu (PI) ;
dans lequel le système de contrôle (5) conçu pour contrôler, lors d'une phase d'enserrement dans laquelle le monopieu (PI) est suspendu à la grue (CR) et est destiné à être enserré par l'organe de maintien de pieu (PH), une position et un mouvement du monopieu (PI) suspendu dans ledit plan horizontal par rapport à l'organe de maintien de pieu (PH),
dans lequel le système de contrôle (5) est conçu pour fournir à l'unité de commande de mouvement (4) des signaux représentatifs de la position et du mouvement du monopieu (PI) par rapport à l'organe de maintien de pieu (PH),
dans lequel l'unité de commande de mouvement (4) est conçue pour actionner les actionneurs de mouvement (3) pour synchroniser un mouvement de l'organe de maintien de pieu (PH) avec un mouvement du monopieu (PI) par rapport à la coque (HU) en fonction des signaux représentatifs de la position et du mouvement du monopieu (PI), et dans lequel l'unité de commande de mouvement (4) est conçue en outre pour actionner les actionneurs de mouvement (3) pour aligner un centre de l'organe de maintien de pieu (PH) avec un axe central du monopieu (PI), dans lequel l'unité de commande de mouvement (4) est conçue pour actionner les actionneurs de mouvement (3) pour synchroniser d'abord un mouvement de l'organe de maintien de pieu (PH) avec un mouvement du monopieu (PI) dans une direction x le long d'une direction longitudinale du bâtiment, et pour actionner ensuite les actionneurs de mouvement (3) pour synchroniser un mouvement de l'organe de maintien de pieu (PH) avec un mouvement du monopieu (PI) dans une direction y, la direction y étant perpendiculaire à la direction x.

8. Bâtiment selon une ou plusieurs des revendications 6-7, dans lequel le système de contrôle (5) comprend en outre un ou plusieurs capteurs pour fournir des données réelles relatives à un ou plusieurs des éléments suivants : mouvement du bâtiment, position du bâtiment, fonctionnement d'un système de positionnement dynamique, stabilité du bâtiment, fonctionnement d'un système de ballast du bâtiment, et dans lequel le système de contrôle est conçu pour fournir les signaux provenant du ou des capteurs supplémentaires à l'unité de commande de mouvement (4).

9. Bâtiment selon une ou plusieurs des revendications 6-8, dans lequel la grue (CR) est conçue pour déplacer latéralement le monopieu (PI) suspendu vers l'organe de maintien de pieu (PH) pour l'enserrement du monopieu (PI) par l'organe de maintien de pieu (PH).

10. Bâtiment selon une ou plusieurs des revendications 6-9, dans lequel le système de contrôle (5) comprend un ou plusieurs capteurs de distance (6), par exemple placés sur l'organe de maintien de pieu (PH), pour mesurer la distance et/ou la position du monopieu (PI) par rapport à l'organe de maintien de pieu (PH), permettant par exemple la détermination du mouvement sur la base de plusieurs mesures de distance dans le temps.

11. Bâtiment selon la revendication 10, dans lequel le système de contrôle (5) comprend au moins deux capteurs de distance (6), qui sont chacun placés par exemple sur l'organe de maintien de pieu (PH), dans lequel les capteurs de distance (6) sont séparés l'un de l'autre, par exemple sur l'organe de maintien de pieu (PH), et dans lequel au moins deux des capteurs de distance (6) ont des champs de vision qui se chevauchent, par exemple dans lequel le champ de vision de chacun des capteurs de distance (6) comprend le centre de l'organe de maintien de pieu (PH).

12. Bâtiment selon une ou plusieurs des revendications 6-11, dans lequel l'ensemble de support (2) comprend un ou plusieurs rails horizontaux montés sur la coque (7), montés sur la coque (HU) du bâtiment (VE), dans lequel un cadre secondaire (8) est mobile sur lesdits un ou plusieurs rails montés sur la coque (7), dans lequel un ou plusieurs rails montés sur le cadre secondaire (9) sont montés sur ledit cadre secondaire et perpendiculaires aux rails montés sur la coque (9), dans lequel un cadre de support (10) est mobile sur lesdits rails montés sur le cadre secondaire (9), et dans lequel l'organe de maintien de pieu (PH) est monté sur le cadre de support (10), des actionneurs de mouvement commandables (3) de l'ensemble de support (2) étant conçus pour déplacer ledit cadre secondaire (8) sur les rails montés sur la coque (7) et pour déplacer le cadre de support (10) sur les rails montés sur le cadre secondaire (9).
